# EUROPEAN PATENT SPECIFICATION

(11) **EP 4 365 473 B1**
(45) Date of publication and mention of the grant of the patent: **12.02.2025**
(21) Application number: 23841984.0
(22) Date of filing: 16.06.2023
(51) Int. Cl.: F16L 57/02, G21D 1/00, F16L 59/02, G21D 1/02, G21C 9/00, F16L 55/00

(54) **MULTIFUNCTIONAL PROTECTION DEVICE FOR NUCLEAR POWER PLANT PIPING**
MULTIFUNKTIONALE SCHUTZVORRICHTUNG FÜR EINE ROHRLEITUNG EINES KERNKRAFTWERKS
DISPOSITIF DE PROTECTION MULTIFONCTIONNEL POUR PIPELINE DE CENTRALE NUCLÉAIRE

(30) Priority: 25.10.2022 CN 202211311580
(43) Date of publication of application: 08.05.2024
(73) Proprietor: China Nuclear Power Design Company Ltd. (Shenzhen), Shenzhen, Guangdong 518100 (CN); Tsinghua Shenzhen International Graduate School, Shenzhen, Guangdong 518000 (CN)
(72) Inventor: LIU, Zhenshun, Shenzhen, Guangdong 518100 (CN); MAO, Qing, Shenzhen, Guangdong 518100 (CN); ZHENG, Xiangyuan, Shenzhen, Guangdong 518100 (CN)
(74) Representative: Westphal, Mussgnug & Partner, Patentanwälte mbB
(86) International application number: PCT/CN2023/100864
(87) International publication number: WO 2024/016918

(56) References cited:
- CN-A- 105 172 219
- CN-A- 108 724 848
- CN-A- 110 081 260
- CN-A- 110 260 084
- CN-A- 110 260 084
- CN-A- 115 654 260
- CN-U- 202 647 053
- CN-U- 202 647 053
- CN-U- 210 661 717
- US-A- 4 101 118

## Description

### BACKGROUND OF THE INVENTION

### 1. Technical Field

The invention relates to the field of a nuclear power plant piping, in particular to a multifunctional protection device for a nuclear power plant piping.

### 2. Description of Related Art

Piping is the channel containing transmission medium in different systems of nuclear power plant, which not only performs core functions, but also constitutes an important pressure boundary. The piping is equipped with insulation layer for insulation, damper for resisting dynamic load, anti-throwing limiter and anti-jet baffle for rupture protection, and hardware facilities such as pit are needed to ensure the quantification of leakage monitoring in order to implement leakage technology before rupture. These hardware facilities are expensive and difficult to maintain, and take up a lot of valuable layout space. Constrained by external design conditions, these hardware facilities are difficult to configure in some cases, which brings engineering difficulties to the construction and operation of nuclear power plants.

The existing piping thermal insulation layer is a solid structure which wraps a thermal insulation material on the outer wall of the piping, and the structural strength and the rigidity of the thermal insulation layer are very low, and the function is single. The more common insulation layer material is glass wool, which has certain pollution and short life.

The piping may be subjected to common internal and external vibration loads during service, such as earthquake, flow-induced vibration, valve discharge load, etc. In order to meet the seismic requirements, dampers and other measures are usually set. Piping double-ended shear fracture (referred to as rupture) is a hypothetical accident in nuclear power plants. Piping rupture can produce dynamic loads and effects such as medium jet, piping impact, pressure fluctuation inside the piping, and pressurization of the compartment where the piping is located. In order to protect these loads, it is necessary to set up anti-knock limiters, anti-jet baffles, explosion-proof supports, etc.

Among them, the application of piping rupture prevention technology is often constrained by the lack of leak detection sensitivity and leak monitoring means. For example, for the piping outside the containment, because there is no pit to collect the leakage medium, the common pit liquid level monitoring and condensate flow monitoring cannot be implemented, and it is difficult to meet the technical requirements of reliability, diversity and redundancy of leakage detection.

In conclusion, in the nuclear power plant, different hardware facilities are set for piping dynamic load resistance, piping insulation and piping rupture protection. These facilities have single function, are difficult to install and maintain, cost a lot, and occupy a lot of valuable layout space. Compared with the reactor building, the application of piping rupture prevention technology outside the containment of nuclear power plant cannot meet the requirements of diversity, reliability and redundancy because of the absence of pit.

Publications CN 202 647 053 U, CN 108 724 848 A, CN 110 081 260 A and CN 110 260 084 A are considered to be relevant to the present application.

### BRIEF SUMMARY OF THE INVENTION

The technical problem to be solved by the invention is to provide a multifunctional protection device for a nuclear power plant piping. This problem is solved by a multifunctional protection device for a nuclear power plant piping having the features of claim 1.

According to the technical scheme, the multifunctional protection device for a nuclear power plant piping comprises an inner pressure-bearing layer which is sleeved on the periphery of the piping and is used for positioning and fixing the piping, and a buffer layer, an absorption layer and an outer pressure-bearing layer are sequentially connected from inside to outside by taking the inner pressure-bearing layer as a center;

The buffer layer comprises a plurality of hollow tube bundle layers, and the plurality of hollow tube bundle layers are connected around the inner pressure-bearing layer to form the buffer layer;

The absorption layer comprises a plurality of multi-gap portions which are mutually staggered, and each multi-gap portion is provided with a plurality of absorption layer pores;

The outer pressure-bearing layer is arranged on the outermost layer of the multifunctional protection device of nuclear power plant piping and is used for providing rigid support.

In some embodiments, the inner pressure-bearing layer is a pipe sleeve structure made of carbon fiber tough material.

In some embodiments, the buffer layer comprises a first hollow tube bundle layer, a second hollow tube bundle layer and a third hollow tube bundle layer which are sequentially connected from inside to outside ,and the first hollow tube bundle layer connected with the inner pressure-bearing layer, the third hollow tube bundle layer connected with the absorption layer;

The first hollow tube bundle layer comprises a plurality of first hollow tube bundle units, the second hollow tube bundle layer comprises a plurality of second hollow tube bundle units, and the third hollow tube bundle layer comprises a plurality of third hollow tube bundle units.

In some embodiments, the first hollow tube bundle unit and the second hollow tube bundle unit are arranged in a staggered manner,, and the second hollow tube bundle unit and the third hollow tube bundle unit are arranged in a staggered manner.

In some embodiments, an area of the first hollow tube bundle unit is larger than an area of the second hollow tube bundle unit, and an area of the second hollow tube bundle unit is larger than an area of the third hollow tube bundle unit;

The first hollow tube bundle unit has a lower density than the second hollow tube bundle unit, and the second hollow tube bundle unit has a lower density than the third hollow tube bundle unit.

In some embodiments, the first hollow tube bundle layer is formed by sequentially arranging a plurality of the first hollow tube bundle units, the second hollow tube bundle layer is formed by sequentially arranging a plurality of the second hollow tube bundle units, and the third hollow tube bundle layer is formed by sequentially arranging a plurality of the third hollow tube bundle units; or

The first hollow tube bundle layer is formed by winding a plurality of first hollow tube bundle units around the axis of the piping, the second hollow tube bundle layer is formed by winding a plurality of second hollow tube bundle units around the axis of the piping, and the third hollow tube bundle layer is formed by winding a plurality of third hollow tube bundle units around the axis of the piping.

In some embodiments, the first hollow tube bundle unit, the second hollow tube bundle unit, and the third hollow tube bundle unit are each nested with tube bundle members.

In some embodiments, the buffer layer is a multilayer structure made of plastic, metal, or composite material.

In some embodiments, the absorption layer is a multilayer structure made of rubber or composite material.

In some embodiments, a staggered surface is formed between every two of the multi-gap portions; or
A predetermined gap is provided between every two of the multi-gap portions.

In some embodiments, the shape of the staggered surface is a flat surface or a pear-shaped surface.

In some embodiments, the porosity of the absorption layer pores proximate to the staggered surface is lower than the porosity of the absorption layer pores distal to the staggered surface.

In some embodiments, the outer pressure-bearing layer is a pipe sleeve structure made of metal material.

In some embodiments, the multifunctional protection device for a nuclear power plant piping further comprises a partition plate coupled to the outer pressure-bearing layer.

In some embodiments, the multifunctional protection device for a nuclear power plant piping further comprises a plurality of segment support frames connected with the partition plate and a support anchor connected with the plurality of segment support frames;
A plurality of segment support frames are arranged at intervals along the axial direction of the outer pressure-bearing layer.

The multifunctional protection device for a nuclear power plant piping has the beneficial effect that the multifunctional protection device for a nuclear power plant piping comprises an inner pressure-bearing layer which is sleeved on the periphery of the piping and used for positioning and fixing the piping, a buffer layer, an absorption layer and an outer pressure-bearing layer are sequentially connected from inside to outside by taking the inner pressure-bearing layer as a center, a plurality of hollow tube bundle layers are connected around the inner pressure-bearing layer to form a buffer layer, the absorption layer comprises a plurality of multi-gap portions which are mutually staggered, each multi-gap portion is provided with a plurality of absorption layer pores, and the outer pressure-bearing layer is arranged at the outmost layer of the multifunctional protection device of nuclear power plant piping and used for providing rigid support. The invention can solve the problems of earthquake resistance, fracture and shock, thermal insulation, and quantitative monitoring of medium leakage of an important piping in a nuclear power plant, can replace a damper, an anti-shock limiting piece, an anti-jet baffle, a pit liquid level monitoring device and the like, optimizes the technical scheme, can be popularized and applied in batches, ensures nuclear safety, optimizes the design scheme, and saves the economic cost for solving the problems in nuclear power engineering.

### BRIEF DESCRIPTION OF THE SEVERAL VIEWS OF THE DRAWINGS

In order to more clearly illustrate the technical solution of the present invention, the following will further illustrate the present invention in conjunction with the accompanying drawings and embodiments. It should be understood that the following drawings only show some embodiments of the present invention, and therefore should not be regarded as limiting the scope. For those of ordinary skill in the art, other related figures can also be obtained from these figures. In the drawings:
Fig. 1 is a sectional view of an insulation layer structure of a multifunctional protection device for a nuclear power plant piping in accordance with some embodiments of the present invention;
Fig. 2 is a sectional view of the segment support of the multifunctional protection device for a nuclear power plant piping in some embodiments of the present invention;
Fig. 3 is an overall outline view of a multifunctional protection device for a nuclear power plant piping according to some embodiments of the present invention.

### DETAILED DESCRIPTION OF THE INVENTION

For a clearer understanding of the technical features, objects, and effects of the present invention, specific embodiments of the present invention will now be described in detail with reference to the accompanying drawings. In the following description, it is to be understood that the terms "front," rear, "above," blow, "left," right, "vertical," horizontal, "top," bottom, "inner," outer, "head," end, "etc., indicate an orientation or positional relationship that is constructed and operated in a particular orientation based on the orientation or positional relationship illustrated in the drawings, It is only for the convenience of describing the technical scheme, and does not indicate that the device or element referred to must have a specific orientation, so it should not be understood as limiting the invention.

It should also be noted that, unless otherwise expressly defined and limited, the terms "mounted", "connected", "fixed", "disposed", etc., should be interpreted in a broad sense, for example, they may be fixedly connected, detachably connected, or integrally connected; they may be mechanically connected, or electrically connected; It can be directly connected or indirectly connected through an intermediate medium, and it can be the internal connection of two components or the interaction of two components. When an element is referred to as being "on" or "under" another element, the element can be "directly" or "indirectly" on the other element, or there may be one or more intervening elements. The terms "first", "second", "third", etc., are only for convenience of description of the present technical scheme, and shall not be understood as indicating or implying the relative importance or the number of the technical features indicated. Therefore, the features defined with "first", "second", "third", etc., may be explicitly or implicitly include one or more technical features. Those skilled in the art can understand the specific meaning of the above terms in the present invention according to the specific situation.

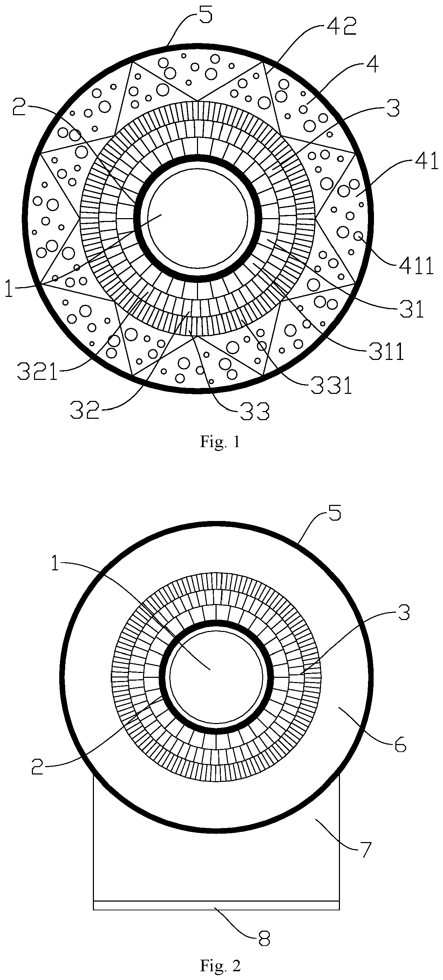

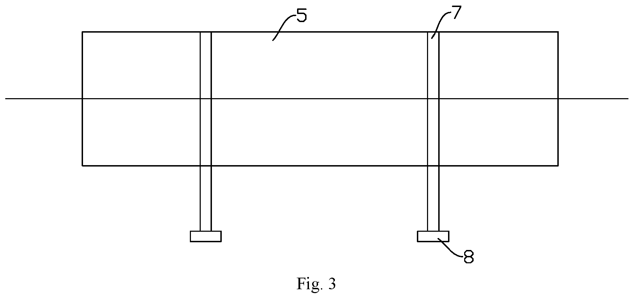

Referring to fig. 1 to fig. 3, a multifunctional protection device for a nuclear power plant piping according to some embodiments of the present invention comprises an inner pressure-bearing layer 2 sleeved on the periphery of a piping 1 for positioning and fixing the piping 1, a buffer layer 3, an absorption layer 4 and an outer pressure-bearing layer 5 are sequentially connected from inside to outside by taking the inner pressure-bearing layer 2 as the center, in the multifunctional protection device for a nuclear power plant piping. The buffer layer 3 comprises a plurality of hollow tube bundle layers, the plurality of hollow tube bundle layers are connected around the inner pressure-bearing layer 2 to form the buffer layer 3, the absorption layer 4 comprises a plurality of multi-gap portions 41 which are arranged in a staggered manner, each multi-gap portion 41 is provided with a plurality of absorption layer pores 411, and the outer pressure-bearing layer 5 is arranged on the outermost layer of the multifunctional protection device of nuclear power plant piping and is used for providing rigid support. The inner pressure-bearing layer 2, the buffer layer 3, the absorption layer 4 and the outer pressure-bearing layer 5 jointly form an insulation layer structure of the multifunctional protection device for a nuclear power plant piping. The multifunctional protection device for a nuclear power plant piping also comprises a partition plate 6 connected with the outer pressure-bearing layer 5, a plurality of segment support frames 7 connected with the partition plate 6 and a support anchor 8 connected with the segment support frames 7, wherein the segment support frames 7 are arranged at intervals along the axial direction of the outer pressure-bearing layer 5.

Understandably, the multifunctional protection device for a nuclear power plant piping can solve the problems of earthquake resistance, fracture impact, thermal insulation and quantitative monitoring of medium leakage of the important piping 1 of the nuclear power plant, can replace a damper, an anti-impact limiting piece, an anti-jet baffle, a pit liquid level monitoring device and the like, optimizes the technical scheme, can be popularized and applied in batches, ensures nuclear safety, optimizes the design scheme, And the economic cost for the nuclear power engineering to deal with the problems is saved.

It is worth mentioning that following the design principles of nature, after millions of years of evolution, biological entities have evolved into efficient and multi-functional structures, which are anatomically optimized to maximize the use of materials and structures to survive in harsh environments. These anatomical structures include, but are not limited to, tubular, gradient, layered, layered, and spiral elements. Lightweight but tough enough to withstand the impact of dynamic loads for long periods of time, these structures provide useful inspiration for the design of engineered structures with superior mechanical properties.

The woodpecker shows excellent shock absorption in rhythmic tapping with its beak. Its pecking frequency can reach 18-22 times per second, averaging 12000 times per day, and each round takes about 50 milliseconds. During the pecking, the impact deceleration was about 1000 G and the repeated impact velocity was about 6-7 m/s, but no head injury was observed after the impact. It is found that the nanostructure of woodpecker beak shows a tightly packed wavy structure at the grain boundary, and a staggered stitched structure with a narrow gap along the edge, which has cushioning properties and converts vibration waves into shear waves. In addition, the head of the woodpecker contains a smooth and large contact surface with the skull by the hyoid device, the subdural space, in which a long tongue with rigid support, to convert normal stress waves into shear waves, producing lateral deformation, and in turn, strain energy is dissipated by adjacent muscles with viscoelasticity behavior. At the same time, the cellular structure of the skull and the subdural space also play an important role in alleviating the impact. In the embodiment, the multifunctional protection device for a nuclear power plant piping adopts the inner and outer pressure-bearing layers with high strength to simulate the rigid skull and the subdural space of the woodpecker, and adopts the absorption layer 4 to simulate the beak and the tongue of the woodpecker, so as to transmit and absorb impact energy and obtain the best shock absorption and impact protection performance.

Among them, the multi-cellular square tube structure of bamboo and the layered composite tube structure of pearl, the shell and peel of coconut and durian also have good impact resistance, and these structures have high strength, impact resistance and viscoelasticity damping behavior. Their common point is that the structure size and density of the multi-layer gradient internal cavity or internal tubular structure are changed gradually. In addition, the existence of bamboo joints also endows the structure with effective load-bearing and impact resistance. If the specific energy absorption capacity in J/G is used to measure the impact resistance of different structures, and the impact resistance structures used in existing engineering are compared with the candidate biomimetic structures obtained from nature, it can be found that the energy absorbed by biomimetic structure is often more than six times that of conventional engineering structures. In this embodiment, the buffer layer 3 adopts an internal cavity with a gradient to simulate the biological structure of the interlayer of the bamboo stem and the durian peel, and the partition plate 6 and the segment support frame 7 are used to simulate the nodes on the bamboo stem. For optimum shock absorption and impact resistance. Meanwhile, the multilayer gradual-change type internal cavity has the function of heat preservation, and can also contain and transmit the leakage of the medium in the piping 1, so as to facilitate the quantitative leakage monitoring of the leak-before-break technology.

Specifically, the inner pressure-bearing layer 2 is a pipe sleeve structure made of carbon fiber tough material. The carbon fiber tough material has the advantages of light weight, high strength, corrosion resistance, high temperature resistance and the like, and can be a carbon fiber reinforced polyphenylene sulfide composite material, a carbon fiber reinforced thermoplastic polyimide composite material, and a carbon fiber reinforced thermoplastic polyimide composite material or other carbon fiber tough materials. The inner pressure-bearing layer 2 provides a first barrier of heat preservation and heat insulation for the multifunctional protection device of nuclear power plant piping, so that the whole insulation layer structure forms a whole, the mechanical property of the insulation layer structure is enhanced, and the vibration and impact suffered by the piping 1structure are restrained and relieved.

In this embodiment, the number of the hollow tube bundle layers is three, and the buffer layer 3 may include a first hollow tube bundle layer 31, a second hollow tube bundle layer 32 and a third hollow tube bundle layer 33 which are sequentially connected from inside to outside and the first hollow tube bundle layer 31connected with the inner pressure-bearing layer 2, the third hollow tube bundle layer 33 connected with the absorption layer 4, the first hollow tube bundle layer 31 includes a plurality of first hollow tube bundle units 311, The second hollow tube bundle layer 32 includes a plurality of second hollow tube bundle units 321, and the third hollow tube bundle layer 33 includes a plurality of third hollow tube bundle units 331. Further, the first hollow tube bundle unit 311 and the second hollow tube bundle unit 321 are staggered, and the second hollow tube bundle unit 321 and the third hollow tube bundle unit 331 are staggered. It can be understood that the buffer layer 3 has misalignment between different hollow tube bundle layers to enhance the structural rigidity and sealing performance. In other embodiments, the number of the hollow tube bundle layers may be more than 3, which may be adjusted according to the actual situation, and is not specifically limited herein.

Preferably, the area of the first hollow tube bundle unit 311 is larger than that of the second hollow tube bundle unit 321, the area of the second hollow tube bundle unit 321 is larger than that of the third hollow tube bundle unit 331, the density of the first hollow tube bundle unit 311 is lower than that of the second hollow tube bundle unit 321, The density of the second hollow tube bundle unit 321 is lower than that of the third hollow tube bundle unit 331. It can be understood that the buffer layer 3 can be composed of a plurality of layers of hollow tube bundles with gradually changed sizes, the tube bundle near the pipe 1 has a larger size and a lower density, and the tube bundle near the absorption layer 4 has a smaller size and a higher density, which ensures that the buffer layer 3 has sufficient deformation capacity to greatly absorb energy and buffer the vibration rate of the structure under the action of dynamic external loads. At that same time, a channel for store and transmitting the leakage of the piping medium is provide so as to facilitate the quantitative monitoring of the leakage, and the multilayer gradual-change type hollow structure of the buffer layer 3 also has a good heat preservation function.

Further, the first hollow tube bundle layer 31 is formed by sequentially arranging a plurality of first hollow tube bundle units 311, the second hollow tube bundle layer 32 is formed by sequentially arranging a plurality of second hollow tube bundle units 321, and the third hollow tube bundle layer 33 is formed by sequentially arranging a plurality of third hollow tube bundle units 331. Alternatively, the first hollow tube bundle layer 31 is formed by winding a plurality of first hollow tube bundle units 311 around the axis of the piping 1, the second hollow tube bundle layer 32 is formed by winding a plurality of second hollow tube bundle units 321 around the axis of the piping 1, and the third hollow tube bundle layer 33 is formed by winding a plurality of third hollow tube bundle units 331 around the axis of the piping 1. It can be understood that the hollow tube bundle layer of the buffer layer 3 can be designed into a shape in which the hollow tube bundle unit is spirally wound around the axis of the piping 1, and this structure has stronger viscous damping generated by interlayer friction or interaction force and better cross-sectional bending stiffness for radial vibration load.

The first hollow tube bundle unit 311, the second hollow tube bundle unit 321, and the third hollow tube bundle unit 331 are nested with tube bundle members. It can be understood that the size of the tube bundle member is smaller than that of the hollow tube bundle unit, and the design can significantly enhance the rigidity of the buffer layer 3 and increase the structural damping through the interlayer friction.

Preferably, the buffer layer 3 is a multilayer structure made of plastic, metal or composite material. It is understandable that the buffer layer 3 may be made of material with good plastic ductility and high fracture toughness, and the material may be graphite, silica gel, or other materials.

Preferably, the absorption layer 4 is a multilayer structure made of rubber or composite material. It will be appreciated that the rubber is elastic and wear resistant, and that the material of the absorbing layer 4 is capable of exhibiting as a viscoelasticity structure, providing high viscous damping and greater deformability. Further, the absorption layer 4 is a multi-gap structure with multi-layered staggered, a staggered surface 42 is formed between every two multi-gap portions 41, and the porosity of the absorption layer pores 411 near the staggered surface 42 is lower than the porosity of the absorption layer pores 411 far from the staggered surface 42. It will be appreciated that the absorber layer 4 has a relatively low porosity near the staggered surface 42 and a relatively high porosity further away from the staggered surface 42, which provides a relatively high structural local stiffness at the staggered surface 42 to convert the transverse vibration wave of the piping 1 into a shear wave in the circumferential direction of the piping 1. While higher porosity increases viscous damping and vibration energy absorption. But also provides a better effect for heat preservation and heat insulation. The shape of the staggered surface 42 is a plane or a pear-shaped surface, and the pear-shaped surface can better convert the transverse vibration shock wave into a circumferential shear wave, and achieve a better mutual constraint function. In some embodiments, a predetermined gap may also be provided between each two multi-gap portions 41 to further enhance the cushioning capability.

Further, the outer pressure-bearing layer 5 is a pipe sleeve structure made of metal material. Preferably, the metal material is a stainless steel material, and the stainless steel material has high strength, good toughness and weld ability, good tensile strength and corrosion resistance. In some other embodiments, the outer pressure-bearing layer 5 may also be made of 45 steel, 20 steel or other materials, which are not specifically limited herein. In which that outer pressure-bearing layer 5 provides rigid support for the entire insulation structure and, in combination with the partition plate 6 and the segment supports, provide restraint stiffness in both the axial and radial direction of the piping 1. The outer pressure-bearing layer 5 and the inner pressure-bearing layer 2 can form a barrier of the piping 1, which can be used as a pressure-bearing boundary of the piping 1. The outer pressure-bearing layer 5 and the inner pressure-bearing layer 2 can work together to prevent the piping 1 from leaking, so as to ensure the safety and reliability of the piping 1 when conveying a medium. At the same time, the outer pressure-bearing layer 5 and the inner pressure-bearing layer 2 can jointly provide an integral rigid support for the piping 1 and position and fix the piping 1.

The partition plate 6 is a rigid annular structure, and is welded with the segments of the outer pressure-bearing layer 5 to divide the insulation layer of the piping 1 into different segments, which is convenient for disassembly, inspection and maintenance. The segment support frame 7 and the support anchor 8 apply the segment restraint to the insulation layer through the partition plate 6 to provide the necessary rigidity for the whole structure. The segment support frame 7 and the support anchor 8 may be designed in conjunction with the design of the piping 1 itself and the arrangement of the piping 1 support. It can be selected to form a combined structure with the piping 1 support, and the segmentation and constraint setting of the segment can be reasonably demonstrated and optimized through the necessary mechanical analysis results of the piping system. Preferably, the partition plate 6, the segment support frame 7 and the support anchor 8 can be made of carbon steel material, which can be Q235 high-quality carbon steel material, so as to ensure the rigidity of the overall frame of the multi-functional protection device for a nuclear power plant piping. Furthermore, the surfaces of the partition plate 6, the segment support frame 7, and the support anchor 8 may all be provided with a galvanized layer to improve corrosion resistance.

In other embodiments, according to actual engineering requirements, in order to solve the problem of quantitative monitoring of piping leakage, a hollow pipe cavity can be added in the insulation layer, and in order to achieve the function of piping damping, the structure of the pipe cavity can be used to replace a damper at a very short part of the piping to achieve piping damping.

In other embodiments, according to actual engineering requirements, an anti-whipping limiting piece, a damper, a pit liquid level collecting device and a conventional glass wool solid insulation layer can be arranged on or near the piping, and enough arrangement space is increased, so that the buffering and insulation performances of the multifunctional protection device for the piping of the nuclear power plant can be further improved.

It can be understood that the multifunctional protection device for the nuclear power plant piping has the following beneficial effects:
1. Compact and simple structure, symmetry, convenient installation and maintenance, and convenience for mass popularization;
2. The multifunctional protection device for the nuclear power plant piping can replace a damper, an anti-whipping limiting piece, an anti-jetting baffle, a pit liquid level monitoring device and the like, can realize the functions of heat preservation, shock resistance, anti-whipping and jetting of the nuclear power plant piping 1, and provides a new channel for quantitative leakage monitoring of piping media, The multifunctional protection device for the nuclear power plant piping can provide a monitoring means which is more reliable and more convenient than the pit liquid level monitoring and the condensing agent flow monitoring, provides an optional scheme for solving related engineering problems, ensures nuclear safety, optimizes a design scheme, and saves the economic cost of nuclear power engineering for solving the problems;
3.The design scheme of the buffer layer 3 provides a high-efficiency cushioning and energy-absorbing structure for the vibration and impact load of the piping 1 through the bionic and recreation of the structures of optimized organisms such as durian peels, bamboos and the like in nature, and provides a good hardware structure for the heat preservation, heat insulation and leakage monitoring of the piping 1;
4.The design scheme of the absorption layer 4 converts the cross section vibration wave generated by the vibration and impact of the piping 1 into the shear wave along the circumferential direction of the piping 1, and the porous structure provides good viscous damping and deformation capacity, and can also produce good thermal insulation effect;
5. The semi-rigid design of the inner pressure-bearing layer 2 and the outer pressure-bearing layer 5, together with the buffer layer 3 and the absorption layer 4, imitates the combined structure of the beak, skull, tongue and subdural space of the woodpecker, providing a naturally selected structure optimized for shock and impact resistance.

It should be understood that the above embodiments only represent the preferred embodiments of the present invention, and the description is more specific and detailed, but it should not be interpreted as limiting the patent scope of the present invention; It should be noted that, for those of ordinary skill in the art, the above technical features can be freely combined, and several modifications and improvements can be made without departing from the present invention. Accordingly, it is intended that all changes and modifications which come within the scope of the appended claims shall be construed accordingly.

## Claims

1. A multifunctional protection device for a nuclear power plant piping, which comprise:
an inner pressure-bearing layer (2) sleeved on the periphery of a piping (1) and used for positioning and fixing the piping (1);
a buffer layer (3), an absorption layer (4) and an outer pressure-bearing layer (5) are sequentially connected from inside to outside by taking the inner pressure-bearing layer (2) as a center;
the buffer layer (3) comprises a plurality of hollow tube bundle layers, and the plurality of hollow tube bundle layers are connected around the inner pressure-bearing layer (2) to form the buffer layer (3);
the absorption layer (4) comprises a plurality of multi-gap portions (41) which are arranged in a staggered manner, and each multi-gap portion (41) is provided with a plurality of absorption layer pores (411);
the outer pressure-bearing layer (5) is arranged on the outermost layer of the multifunctional protection device of nuclear power plant piping and is used for providing rigid support and preventing the piping (1) from leaking.

2. The multifunctional protection device for a nuclear power plant piping according to claim 1, wherein the inner pressure-bearing layer (2) is a pipe sleeve structure made of carbon fiber tough material.

3. The multifunctional protection device for a nuclear power plant piping according to claim 1, wherein the buffer layer (3) comprises a first hollow tube bundle layer (31), a second hollow tube bundle layer (32) and a third hollow tube bundle layer (33) which are sequentially connected from inside to outside and the first hollow tube bundle layer (31) is connected with the inner pressure-bearing layer (2); the third hollow tube bundle layer (33) is connected with the absorption layer(4);
the first hollow tube bundle layer (31) comprises a plurality of first hollow tube bundle units (311), the second hollow tube bundle layer (32) comprises a plurality of second hollow tube bundle units (321), and the third hollow tube bundle layer (33) comprises a plurality of third hollow tube bundle units (331).

4. The multifunctional protection device for a nuclear power plant piping according to claim 3, wherein the first hollow tube bundle unit (311) and the second hollow tube bundle unit (321) are arranged in a staggered manner, and the second hollow tube bundle unit (321) and the third hollow tube bundle unit (331) are arranged in a staggered manner.

5. The multifunctional protection device for a nuclear power plant piping according to claim 4, wherein an area of the first hollow tube bundle unit (311) is larger than that of the second hollow tube bundle unit (321), and an area of the second hollow tube bundle unit (321) is larger than that of the third hollow tube bundle unit (331);
the first hollow tube bundle unit (311) has a lower density than the second hollow tube bundle unit (321), and the second hollow tube bundle unit (321) has a lower density than the third hollow tube bundle unit (331).

6. The multifunctional protection device for a nuclear power plant piping according to claim 3, wherein the first hollow tube bundle layer (31) is formed by arranging a plurality of the first hollow tube bundle units (311) in sequence, the second hollow tube bundle layer (32) is formed by arranging a plurality of the second hollow tube bundle units (321) in sequence, and the third hollow tube bundle layer (33) is formed by arranging a plurality of third hollow tube bundle units (331) in sequence; or
the first hollow tube bundle layer (31) is formed by winding a plurality of first hollow tube bundle units (311) around the axis of the piping (1), the second hollow tube bundle layer (32) is formed by winding a plurality of second hollow tube bundle units (321) around the axis of the piping (1); and the third hollow tube bundle layer (33) is formed by winding a plurality of third hollow tube bundle units (331) around the axis of the piping (1).

7. The multifunctional protection device for a nuclear power plant piping according to claim 6, wherein the first hollow tube bundle unit (311), the second hollow tube bundle unit (321), and the third hollow tube bundle unit (331) are nested with tube bundle members.

8. The multifunctional protection device for a nuclear power plant piping according to claim 3, wherein the buffer layer (3) is a multilayer structure made of plastic, metal or composite material.

9. The multifunctional protection device for a nuclear power plant piping according to claim 1, wherein the absorption layer (4) is a multilayer structure made of rubber or composite material.

10. The multifunctional protection device for a nuclear power plant piping according to claim 1, wherein a staggered surface (42) is formed between every two of the multi-gap portions (41), or
a predetermined gap is provided between every two of the multi-gap portions (41).

11. The multifunctional protection device for a nuclear power plant piping according to claim 10, wherein the staggered surface (42) is in the shape of a plane or a pear-shaped surface.

12. The multifunctional protection device for a nuclear power plant piping according to claim 1, wherein the porosity of the absorption layer pores (411) close to the staggered surface (42) is lower than the porosity of the absorption layer pores (411) far away from the staggered surface (42).

13. The multifunctional protection device for a nuclear power plant piping according to claim 1, wherein the outer pressure-bearing layer (5) is a pipe sleeve structure made of a metal material.

14. The multifunctional protection device for a nuclear power plant piping according to claim 13, wherein the multifunctional protection device for a nuclear power plant piping further comprises a partition plate (6) connected to the outer pressure-bearing layer (5).

15. The multifunctional protection device for a nuclear power plant piping according to claim 14, wherein the multifunctional protection device for a nuclear power plant piping further comprises a plurality of segment support frames (7) connected with the partition plate (6) and a support anchor (8) connected with the segment support frames (7);
the plurality of segment support frames (7) are arranged at intervals along the axial direction of the outer pressure-bearing layer (5).

## Patentansprüche

1. Multifunktionale Schutzvorrichtung für eine Kernkraftwerk-Rohrleitung, aufweisend:
eine innere drucktragende Schicht (2), die auf den Umfang einer Rohrleitung (1) aufgeschoben und zum Positionieren und Fixieren der Rohrleitung (1) verwendet wird;
eine Pufferschicht (3), eine Absorptionsschicht (4) und eine äußere drucktragende Schicht (5), die nacheinander von innen nach außen verbunden sind, wobei die innere drucktragende Schicht (2) als Zentrum dient;
die Pufferschicht (3) weist eine Vielzahl von Hohlrohrbündelschichten auf und die Vielzahl von Hohlrohrbündelschichten sind um die innere drucktragende Schicht (2) herum verbunden, um die Pufferschicht (3) zu bilden;
die Absorptionsschicht (4) weist eine Vielzahl von Mehrfachspaltabschnitten (41) auf, die in einer versetzten Weise angeordnet sind, und jeder Mehrfachspaltabschnitt (41) ist mit einer Vielzahl von Absorptionsschichtporen (411) versehen;
die äußere drucktragende Schicht (5) ist auf der äußersten Schicht der multifunktionalen Schutzvorrichtung der Kernkraftwerk-Rohrleitung angeordnet und wird verwendet, um eine starre Unterstützung bereitzustellen und eine Leckage an der Rohrleitung (1) zu verhindern.

2. Multifunktionale Schutzvorrichtung für eine Kernkraftwerk-Rohrleitung gemäß Anspruch 1, wobei die innere drucktragende Schicht (2) eine Rohraufschiebestruktur ist, die aus einem harten Material auf Kohlenstofffaserbasis hergestellt ist.

3. Multifunktionale Schutzvorrichtung für eine Kernkraftwerk-Rohrleitung gemäß Anspruch 1, wobei die Pufferschicht (3) eine erste Hohlrohrbündelschicht (31), eine zweite Hohlrohrbündelschicht (32) und eine dritte Hohlrohrbündelschicht (33) aufweist, die von innen nach außen aufeinanderfolgend verbunden sind, und die erste Hohlrohrbündelschicht (31) mit der inneren drucktragenden Schicht (2) verbunden ist; die dritte Hohlrohrbündelschicht (33) mit der Absorptionsschicht (4) verbunden ist;
die erste Hohlrohrbündelschicht (31) eine Vielzahl von ersten Hohlrohrbündel-Einheiten (311) aufweist, die zweite Hohlrohrbündelschicht (32) eine Vielzahl von zweiten Hohlrohrbündel-Einheiten (321) aufweist, und die dritte Hohlrohrbündelschicht (33) eine Vielzahl von dritten Hohlrohrbündel-Einheiten (331) aufweist.

4. Multifunktionale Schutzvorrichtung für eine Kernkraftwerk-Rohrleitung gemäß Anspruch 3, wobei die erste Hohlrohrbündel-Einheit (311) und die zweite Hohlrohrbündel-Einheit (321) versetzt angeordnet sind und die zweite Hohlrohrbündel-Einheit (321) und die dritte Hohlrohrbündel-Einheit (331) versetzt angeordnet sind.

5. Multifunktionale Schutzvorrichtung für eine Kernkraftwerk-Rohrleitung gemäß Anspruch 4, wobei eine Fläche der ersten Hohlrohrbündel-Einheit (311) größer ist als jene der zweiten Hohlrohrbündel-Einheit (321) und eine Fläche der zweiten Hohlrohrbündel-Einheit (321) größer ist als jene der dritten Hohlrohrbündel-Einheit (331);
die erste Hohlrohrbündel-Einheit (311) eine geringere Dichte als die zweite Hohlrohrbündel-Einheit (321) aufweist und die zweite Hohlrohrbündel-Einheit (321) eine geringere Dichte als die dritte Hohlrohrbündel-Einheit (331) aufweist.

6. Multifunktionale Schutzvorrichtung für eine Kernkraftwerk-Rohrleitung gemäß Anspruch 3, wobei die erste Hohlrohrbündelschicht (31) gebildet wird, indem eine Vielzahl der ersten Hohlrohrbündel-Einheiten (311) nacheinander angeordnet wird, die zweite Hohlrohrbündelschicht (32) gebildet wird, indem eine Vielzahl der zweiten Hohlrohrbündel-Einheiten (321) nacheinander angeordnet wird, und die dritte Hohlrohrbündelschicht (33) gebildet wird, indem eine Vielzahl der dritten Hohlrohrbündel-Einheiten (331) nacheinander angeordnet wird; oder
die erste Hohlrohrbündelschicht (31) durch Wickeln einer Vielzahl von ersten Hohlrohrbündel-Einheiten (311) um die Achse der Rohrleitung (1) gebildet wird, die zweite Hohlrohrbündelschicht (32) durch Wickeln einer Vielzahl von zweiten Hohlrohrbündel-Einheiten (321) um die Achse der Rohrleitung (1) gebildet wird; und die dritte Hohlrohrbündelschicht (33) durch Wickeln einer Vielzahl von dritten Hohlrohrbündel-Einheiten (331) um die Achse der Rohrleitung (1) gebildet wird.

7. Multifunktionale Schutzvorrichtung für eine Kernkraftwerk-Rohrleitung gemäß Anspruch 6, wobei die erste Hohlrohrbündel-Einheit (311), die zweite Hohlrohrbündel-Einheit (321) und die dritte Hohlrohrbündel-Einheit (331) mit Rohrbündel-Elementen ineinandergesteckt sind.

8. Multifunktionale Schutzvorrichtung für eine Kernkraftwerk-Rohrleitung gemäß Anspruch 3, wobei die Pufferschicht (3) eine mehrschichtige Struktur aus Kunststoff, Metall oder einem Verbundmaterial ist.

9. Multifunktionale Schutzvorrichtung für eine Kernkraftwerk-Rohrleitung gemäß Anspruch 1, wobei die Absorptionsschicht (4) eine mehrschichtige Struktur aus Gummi oder einem Verbundmaterial ist.

10. Multifunktionale Schutzvorrichtung für eine Kernkraftwerk-Rohrleitung gemäß Anspruch 1, wobei eine versetzte Fläche (42) zwischen jedem zweiten der Mehrfachspaltabschnitte (41) ausgebildet ist, oder
ein vorbestimmter Spalt zwischen jedem zweiten der Mehrfachspaltabschnitte (41) vorgesehen ist.

11. Multifunktionale Schutzvorrichtung für eine Kernkraftwerk-Rohrleitung gemäß Anspruch 10, wobei die versetzte Fläche (42) in Form einer Ebene oder einer birnenförmigen Fläche vorliegt.

12. Multifunktionale Schutzvorrichtung für eine Kernkraftwerk-Rohrleitung gemäß Anspruch 1, wobei die Porosität der Absorptionsschichtporen (411) nahe der versetzten Fläche (42) geringer als die Porosität der Absorptionsschichtporen (411) entfernt von der versetzten Fläche (42) ist.

13. Multifunktionale Schutzvorrichtung für eine Kernkraftwerk-Rohrleitung gemäß Anspruch 1, wobei die äußere drucktragende Schicht (5) eine Rohraufschiebestruktur aus einem Metallmaterial ist.

14. Multifunktionale Schutzvorrichtung für eine Kernkraftwerk-Rohrleitung gemäß Anspruch 13, wobei die multifunktionale Schutzvorrichtung für eine Kernkraftwerk-Rohrleitung ferner eine Trennplatte (6) aufweist, die mit der äußeren drucktragenden Schicht (5) verbunden ist.

15. Multifunktionale Schutzvorrichtung für eine Kernkraftwerk-Rohrleitung gemäß Anspruch 14, wobei die multifunktionale Schutzvorrichtung für eine Kernkraftwerk-Rohrleitung ferner eine Vielzahl von Segmentstützrahmen (7), die mit der Trennplatte (6) verbunden sind, und einen Stützanker (8), der mit den Segmentstützrahmen (7) verbunden ist, aufweist;
die Vielzahl von Segmentstützrahmen (7) beabstandet entlang der axialen Richtung der äußeren drucktragende Schicht (5) angeordnet sind.

## Revendications

1. Dispositif de protection multifonctionnel pour une tuyauterie de centrale nucléaire, qui comprend :
une couche intérieure de support de pression (2) emmanchée sur la périphérie d'une tuyauterie (1) et utilisée pour positionner et fixer la tuyauterie (1) ;
une couche tampon (3), une couche d'absorption (4) et une couche extérieure porteuse de pression (5) qui sont reliées séquentiellement de l'intérieur vers l'extérieur en prenant la couche intérieure porteuse de pression (2) comme centre ;
la couche tampon (3) comprenant une pluralité de couches de faisceau de tubes creux, et la pluralité de couches de faisceau de tubes creux étant reliées autour de la couche intérieure porteuse de pression (2) pour former la couche tampon (3) ;
la couche d'absorption (4) comprenant une pluralité de parties à espaces multiples (41) qui sont disposées d'une manière décalée, et chaque partie à espaces multiples (41) étant pourvue d'une pluralité de pores de couche d'absorption (411) ;
la couche extérieure porteuse de pression (5) étant disposée sur la couche la plus extérieure du dispositif de protection multifonctionnel de tuyauterie de centrale nucléaire et étant utilisée pour fournir un support rigide et empêcher la tuyauterie (1) de fuir.

2. Dispositif de protection multifonctionnel pour une tuyauterie de centrale nucléaire selon la revendication 1, dans lequel la couche intérieure de support de pression (2) est une structure de manchon de tuyau faite d'un matériau dur à base de fibres de carbone.

3. Dispositif de protection multifonctionnel pour une tuyauterie de centrale nucléaire selon la revendication 1, dans lequel la couche tampon (3) comprend une première couche de faisceau de tubes creux (31), une deuxième couche de faisceau de tubes creux (32) et une troisième couche de faisceau de tubes creux (33) qui sont reliées séquentiellement de l'intérieur vers l'extérieur et la première couche de faisceau de tubes creux (31) est reliée à la couche intérieure porteuse de pression (2) ; la troisième couche de faisceau de tubes creux (33) est reliée à la couche d'absorption (4) ;
la première couche de faisceau de tubes creux (31) comprend une pluralité de premières unités de faisceau de tubes creux (311), la deuxième couche de faisceau de tubes creux (32) comprend une pluralité de deuxièmes unités de faisceau de tubes creux (321), et la troisième couche de faisceau de tubes creux (33) comprend une pluralité de troisièmes unités de faisceau de tubes creux (331).

4. Dispositif de protection multifonctionnel pour une tuyauterie de centrale nucléaire selon la revendication 3, dans lequel la première unité de faisceau de tubes creux (311) et la deuxième unité de faisceau de tubes creux (321) sont disposées d'une manière décalée, et la deuxième unité de faisceau de tubes creux (321) et la troisième unité de faisceau de tubes creux (331) sont disposées d'une manière décalée.

5. Dispositif de protection multifonctionnel pour une tuyauterie de centrale nucléaire selon la revendication 4, dans lequel une surface de la première unité de faisceau de tubes creux (311) est plus grande que celle de la deuxième unité de faisceau de tubes creux (321), et une surface de la deuxième unité de faisceau de tubes creux (321) est plus grande que celle de la troisième unité de faisceau de tubes creux (331) ;
la première unité de faisceau de tubes creux (311) présente une densité inférieure à la deuxième unité de faisceau de tubes creux (321), et la deuxième unité de faisceau de tubes creux (321) présente une densité inférieure à la troisième unité de faisceau de tubes creux (331).

6. Dispositif de protection multifonctionnel pour une tuyauterie de centrale nucléaire selon la revendication 3, dans lequel la première couche de faisceau de tubes creux (31) est formée en disposant une pluralité des premières unités de faisceau de tubes creux (311) en séquence, la deuxième couche de faisceau de tubes creux (32) est formée en disposant une pluralité des deuxièmes unités de faisceau de tubes creux (321) en séquence, et la troisième couche de faisceau de tubes creux (33) est formée en disposant une pluralité de troisièmes unités de faisceau de tubes creux (331) en séquence ; ou
la première couche de faisceau de tubes creux (31) est formée en enroulant une pluralité de premières unités de faisceau de tubes creux (311) autour de l'axe de la tuyauterie (1), la deuxième couche de faisceau de tubes creux (32) est formée en enroulant une pluralité de deuxièmes unités de faisceau de tubes creux (321) autour de l'axe de la tuyauterie (1) ; et la troisième couche de faisceau de tubes creux (33) est formée en enroulant une pluralité de troisièmes unités de faisceau de tubes creux (331) autour de l'axe de la tuyauterie (1).

7. Dispositif de protection multifonctionnel pour une tuyauterie de centrale nucléaire selon la revendication 6, dans lequel la première unité de faisceau de tubes creux (311), la deuxième unité de faisceau de tubes creux (321) et la troisième unité de faisceau de tubes creux (331) sont emboîtées avec des éléments de faisceau de tubes.

8. Dispositif de protection multifonctionnel pour une tuyauterie de centrale nucléaire selon la revendication 3, dans lequel la couche tampon (3) est une structure multicouche faite de plastique, de métal ou de matériau composite.

9. Dispositif de protection multifonctionnel pour une tuyauterie de centrale nucléaire selon la revendication 1, dans lequel la couche d'absorption (4) est une structure multicouche faite de caoutchouc ou de matériau composite.

10. Dispositif de protection multifonctionnel pour une tuyauterie de centrale nucléaire selon la revendication 1, dans lequel une surface décalée (42) est formée entre chaque paire des parties à espaces multiples (41), ou
un espace prédéterminé est prévu entre chaque paire des parties à espaces multiples (41).

11. Dispositif de protection multifonctionnel pour une tuyauterie de centrale nucléaire selon la revendication 10, dans lequel la surface décalée (42) est sous la forme d'un plan ou d'une surface en forme de poire.

12. Dispositif de protection multifonctionnel pour une tuyauterie de centrale nucléaire selon la revendication 1, dans lequel la porosité des pores de couche d'absorption (411) proches de la surface décalée (42) est inférieure à la porosité des pores de couche d'absorption (411) éloignés de la surface décalée (42).

13. Dispositif de protection multifonctionnel pour une tuyauterie de centrale nucléaire selon la revendication 1, dans lequel la couche extérieure porteuse de pression (5) est une structure de manchon de tuyau faite d'un matériau métallique.

14. Dispositif de protection multifonctionnel pour une tuyauterie de centrale nucléaire selon la revendication 13, dans lequel le dispositif de protection multifonctionnel pour une tuyauterie de centrale nucléaire comprend en outre une plaque de séparation (6) reliée à la couche extérieure porteuse de pression (5).

15. Dispositif de protection multifonctionnel pour une tuyauterie de centrale nucléaire selon la revendication 14, dans lequel le dispositif de protection multifonctionnel pour une tuyauterie de centrale nucléaire comprend en outre une pluralité de cadres de support de segment (7) reliés à la plaque de séparation (6) et un ancrage de support (8) relié aux cadres de support de segment (7) ;
la pluralité de cadres de support de segment (7) sont disposés à des intervalles le long de la direction axiale de la couche extérieure de support de pression (5).
